# EUROPÄISCHE PATENTANMELDUNG

(11) **EP 4 063 171 A1**
(43) Veröffentlichungstag der Anmeldung: **28.09.2022**
(21) Anmeldenummer: 22162747.4
(22) Anmeldetag: 17.03.2022
(51) Int. Cl.: B60L 5/00, B60L 5/16, B60L 5/32

(54) **STROMABNEHMER SOWIE EIN STRASSENFAHRZEUG MIT EINEM SOLCHEN STROMABNEHMER**

(30) Priorität: 26.03.2021 DE 102021203046
(71) Anmelder: Siemens Mobility GmbH, 81739 München (DE)
(72) Erfinder: Bühs, Florian, 10777 Berlin (DE); Molthan, Helge, 83075 Bad Feilnbach (DE); Schauen, Markus Gyusok, 81677 München (DE)

(57) **Zusammenfassung**

Die Erfindung betrifft einen Stromabnehmer (3) für ein elektrisch oder hybridelektrisch angetriebenes Straßenfahrzeug (1) zur Einspeisung von Traktionsenergie aus einer zweipoligen, je Kontaktpol einen Fahrdraht (4) aufweisenden Oberleitungsanlage. Er umfasst ein aufrichtbares Traggestell (6) mit einem fahrzeugseitigen Ende, an dem ein Grundgelenk (10) zur gelenkigen Abstützung auf dem Straßenfahrzeug (1) angeordnet ist, und mit einem fahrdrahtseitigen Ende, an dem es je Kontaktpol mindestens ei-ne Schleifleiste (14) zur elektrischen Kontaktierung eines Fahrdrahtes (4) trägt. Er umfasst ferner eine Hubvorrichtung (15) zum Aufrichten des Traggestells (6), mittels der die Schleifleisten (14) aus einer unteren Ruheposition in eine obere Kontaktposition abhebbar sind. Indem die Hubvorrichtung (15) zum Aufrichten des Traggestells (6) mit steuerbarer Hubgeschwindigkeit (V) ausgebildet ist, wobei die Hubgeschwindigkeit (V) der Schleifleisten (14) beim Erreichen der Kontaktposition vermindert wird, kann ein Stromabnehmer (3) bereitgestellt werden, der schnelle und verschleißarme Andrahtvorgänge ermöglicht.

## Beschreibung

Die Erfindung betrifft einen Stromabnehmer nach dem Oberbegriff des Patentanspruches 1 sowie ein Straßenfahrzeug mit einem solchen Stromabnehmer.

Aus der Offenlegungsschrift DE 10 2018 215 593 A1 ist ein derartiger Stromabnehmer für ein elektrisch oder hybridelektrisch angetriebenes Straßenfahrzeug zur Einspeisung von Traktionsenergie aus einer zweipoligen, je Kontaktpol einen Fahrdraht aufweisenden Oberleitungsanlage bekannt. Er umfasst ein aufrichtbares Traggestell mit einem fahrzeugseitigen Ende, an dem ein Grundgelenk zur gelenkigen Abstützung auf dem Straßenfahrzeug angeordnet ist, und mit einem fahrdrahtseitigen Ende, an dem es je Kontaktpol mindestens eine Schleifleiste zur elektrischen Kontaktierung eines Fahrdrahtes trägt. Ferner umfasst der Stromabnehmer eine Hubvorrichtung zum Aufrichten des Traggestells, mittels der die Schleifleisten aus einer unteren Ruheposition in eine obere Kontaktposition abhebbar sind.

Straßenfahrzeuge mit solchen Stromabnehmern können auf einer Fahrbahn mit elektrifizierter Fahrspur, oberhalb der die Fahrdrähte der Oberleitungsanlage verlaufen, während der Fahrt Traktionsenergie aus der Oberleitung zur Versorgung des Traktionsantriebes oder anderer elektrischer Verbraucher sowie zur Aufladung eines fahrzeugseitigen Energiespeichers einspeisen, indem die Schleifleisten durch die Hubvorrichtung von unten an die Fahrdrähte gedrückt werden, sodass sich ein elektrischer Schleifkontakt zur Energieübertragung ausbildet. Die Schleifleisten sind typischerweise aus Kohlenstoff gefertigt und unterliegen einem betriebsbedingten Verschleiß, insbesondere einem mechanischen Verschleiß in Form von Abrieb aus der Beschleifung der Fahrdrähte und in Form von Abplatzungen aufgrund von Stoßeinwirkungen.

Der Erfindung liegt daher die Aufgabe zugrunde, einen Stromabnehmer der eingangs genannten Art mit längerer Betriebsfestigkeit bereitzustellen.

Die Aufgabe wird erfindungsgemäß gelöst durch einen gattungsgemäßen Stromabnehmer mit den im kennzeichnenden Teil des Patentanspruches 1 angegebenen Merkmalen. Demnach ist ein derartiger Stromabnehmer gekennzeichnet durch Ausbildung der Hubvorrichtung zum Aufrichten des Traggestells mit steuerbarer Hubgeschwindigkeit. Dabei wird die Hubgeschwindigkeit der Schleifleisten beim Erreichen der Kontaktposition vermindert. Durch ein derart optimiertes Andrahten des Stromabnehmers kann ein hartes Anschlagen der Schleifleisten gegen die Fahrdrähte vermieden werden, was wiederum stoßbedingte Abplatzungen oder Ausbrüche von Kohlestücken aus den Schleifleisten reduziert. Da es im Betrieb eines erfindungsgemäßen Stromabnehmers täglich - etwa im Vergleich zu Stromabnehmern von Schienenfahrzeugen - bedingt durch nicht elektrifizierte Streckenabschnitte sowie durch Überhol- und Ausweichmanöver zu einer Vielzahl an Ab- und Andrahtvorgängen kommt, bewirkt eine Reduzierung der Hubgeschwindigkeit beim Kontaktieren in starkem Maße eine Verschließreduzierung und damit längere Standzeiten der Schleifleisten. Eine Verlängerung von Wartungsintervallen verringert die Betriebskosten erfindungsgemäßer Stromabnehmer.

In einer vorteilhaften Ausführungsform umfasst der erfindungsgemäße Stromabnehmer eine Bestimmungseinrichtung zur Bestimmung einer Höhendifferenz zwischen Schleifleisten und Fahrdrähten, wobei die Hubvorrichtung die Hubgeschwindigkeit der Schleifleisten in Abhängigkeit der Höhendifferenz ansteuert. Zur Erzielung eines sanften Kontaktschlusses zwischen Schleifleisten und Fahrdrähten genügt es, die Hubgeschwindigkeit der Schleifleisten ab einer vorgebbaren Höhendifferenz zu reduzieren, damit diese bis zum Andrahten, also dem Anlegen der Schleifleisten an die Fahrdrähte, so niedrig ist, dass die Schleifleisten nicht beschädigt werden. Vor Erreichen der Höhendifferenz soll die Hubgeschwindigkeit nicht vermindert werden, damit die Hubphase insgesamt in möglichst kurzer Zeit erfolgt. Die Höhendifferenz, ab der die Hubgeschwindigkeit reduziert wird, hängt von der Art und Größe des Traggestells ab und kann beispielsweise 50 cm, vorzugsweise 40 cm oder 30 cm sein.

In einer weiteren vorteilhaften Ausführungsform des erfindungsgemäßen Stromabnehmers weist die Bestimmungseinrichtung eine Sensoreinheit zur direkten Messung der Höhendifferenz auf. Die Höhendifferenz, also der vertikale Abstand zwischen Schleifleisten und Fahrdrähten, kann mit einer berührungslos arbeitenden Sensoreinheit, beispielsweise einem Laser oder einem Radar oder über Auswertung eines in die Fahrdrähte eingespeisten modulierten Niederfrequenzsignals, gemessen werden. Insbesondere könnten solche Sensoreinheiten genutzt werden, welche auch die seitliche Relativlage des auf einem Straßenfahrzeug installierten Stromabnehmers zu den Fahrdrähten der Oberleitungsanlage messen.

In einer weiteren vorteilhaften Ausführungsform des erfindungsgemäßen Stromabnehmers ist die Bestimmungseinrichtung mit einer Datenbank verbunden, in der Fahrdrahthöhen über Fahrbahnniveau für Orte der Fahrdrähte gespeichert sind, und weist eine Ortungseinheit zur Ermittlung der aktuellen Fahrzeugposition, einen Lagesensor zur Ermittlung der aktuellen Schleifleistenhöhe über Fahrbahnniveau, und eine Recheneinheit zur Berechnung der Höhendifferenz aus Fahrdrahthöhe und Schleifleistenhöhe auf. Die Datenbank kann im Straßenfahrzeug selbst mitgeführt werden oder sie kann auf der Landseite in einer Betreiberzentrale der Oberleitungsanlage angeordnet sein. Als Lagesensor zur Ermittlung der Schleifleistenhöhe kann beispielsweise ein interner Höhensensor oder ein Drehwinkelsensor eingesetzt werden.

In einer weiteren vorteilhaften Ausführungsform des erfindungsgemäßen Stromabnehmers hebt die Hubvorrichtung die Schleifleisten in einer Schnellhubphase aus der Ruheposition oberhalb einer Höhendifferenzschwelle und in einer Kontaktierphase unterhalb der Höhendifferenzschwelle an, wobei die Hubgeschwindigkeit in der Kontaktierphase abgebremst ist gegenüber der Schnellhubphase. Während der gesamten Hubphase verringert sich die Höhendifferenz zwischen Schleifleisten und Fahrdrähten. In der Schnellhubphase werden die Schleifleisten mit hoher Hubgeschwindigkeit bis zur Höhendifferenzschwelle angehoben, was dem größten Teil der Hubhöhe zwischen Ruhe- und Kontaktposition entspricht. Hierdurch können insgesamt schnelle Andrahtvorgänge durchgeführt werden, damit die Fahrstrecke mit Energieeinspeisung aus der Oberleitung nur minimal verkürzt wird. Durch Abbremsung der Hubgeschwindigkeit ab Erreichen der Höhendifferenzschwelle werden in einer Kontaktierphase die Schleifleisten verzögert, um ohne Beschädigungen an die Fahrdrähte angelegt zu werden. Andrahtvorgänge werden so optimiert, dass trotz kurzer Hubphasen die Verschleißerscheinungen an den Schleifleisten minimiert werden können.

In einer weiteren vorteilhaften Ausführungsform des erfindungsgemäßen Stromabnehmers umfasst die Hubvorrichtung einen pneumatischen Hubantrieb, der durch einen Zuluftstrom aus einer Druckluftquelle gespeist wird, wobei die Hubgeschwindigkeit der Schleifleisten durch ein Ventil für den Zuluftstrom gesteuert wird. Bei dem Ventil kann es sich um ein steuerbares Zuluftventil oder um ein vorgeschaltetes Reduzierventil in der pneumatischen Steuerung handeln.

In einer weiteren vorteilhaften Ausführungsform umfasst der erfindungsgemäße Stromabnehmer eine Bremseinrichtung, die derart mit einem Gelenk des Traggestells gekoppelt ist, dass sie ab Erreichen der Höhendifferenzschwelle ein einem Aufrichtmoment der Hubvorrichtung entgegenwirkendes Bremsmoment auf das Traggestell überträgt. Als separate Bremseinrichtung am Stromabnehmer kommen hier elektrisch, pneumatisch, hydraulisch oder magnetisch betriebene Bremsen in Betracht, die an einem Gelenk des Traggestells ein Bremsmoment in der Kontaktphase aufbringen. Die Nutzung einer separaten Bremseinrichtung hat auch den Vorteil, dass diese geringere Sicherheitsanforderungen als ein Pneumatikventil erfüllen muss, solange diese lediglich beim Andrahtvorgang in der Kontaktierphase wirksam und beim Absenken des Stromabnehmers ohne Kraftwirkung ist.

In einer weiteren vorteilhaften Ausführungsform umfasst der erfindungsgemäße Stromabnehmer eine Bremseinrichtung, die derart mit einem Tragarm des Traggestells gekoppelt ist, dass sie ab Erreichen der Höhendifferenzschwelle eine einer Aufrichtkraft der Hubvorrichtung entgegenwirkende Bremskraft auf den Tragarm überträgt. In dieser alternativen oder zusätzlichen Variante setzt die Bremseinrichtung linear an einem Tragarm des Traggestells an.

In einer weiteren vorteilhaften Ausführungsform des erfindungsgemäßen Stromabnehmers wird die Bremseinrichtung deaktiviert, wenn die Schleifleisten die Fahrdrähte kontaktieren. Die Wirkung der Bremseinrichtung ist temporär. Sobald die Schleifleisten die Fahrdrähte kontaktieren, wird der bremsende Mechanismus wirkungslos, damit es nicht zu einer Beeinflussung der Kontaktkräfte im regulären Betrieb des Stromabnehmers kommt.

Die Erfindung betrifft ferner ein Straßenfahrzeug mit einem elektrischen oder hybrid-elektrischen Traktionsantrieb und einem Stromabnehmer zur Einspeisung von Traktionsenergie aus einer zweipoligen, je Kontaktpol einen Fahrdraht aufweisenden Oberleitungsanlage nach einem der Ansprüche 1 bis 9.

Weitere Vorteile und Eigenschaften der Erfindung ergeben sich aus nachfolgender Beschreibung eines Ausführungsbeispiels anhand der Zeichnungen, in deren
- FIG 1: eine Seitenansicht eines erfindungsgemäßes Straßenfahrzeugs mit Stromabnehmer an einer Höhendiffe renzschwelle,
- FIG 2: den Stromabnehmer aus FIG 1 in Ruheposition
- FIG 3: den Stromabnehmer aus FIG 1 in Kontaktposition und
- FIG 4: eine diagrammatische Darstellung von Hubgeschwindigkeit und Höhendifferenz
schematisch veranschaulicht sind.

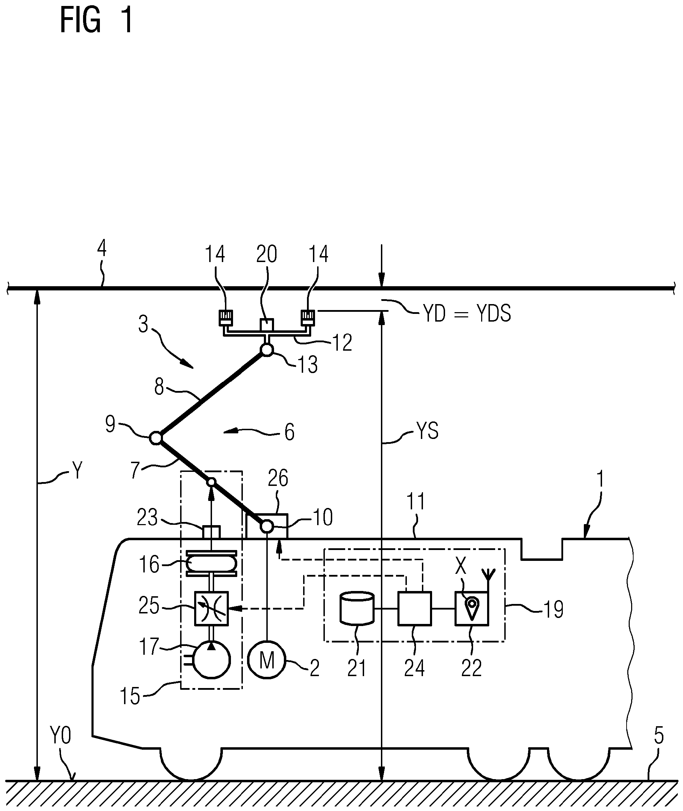

Gemäß FIG 1 weist ein erfindungsgemäßes Straßenfahrzeug 1, beispielsweise ein schweres Nutzfahrzeug oder ein Bus, einen elektrischen oder hybrid-elektrischen Traktionsantrieb 2 sowie einen erfindungsgemäßen Stromabnehmer 3 zur Einspeisung von Traktionsenergie aus einer straßenseitig installierten, zweipoligen Oberleitungsanlage auf. Die Oberleitungsanlage umfasst je Kontaktpol einen Fahrdraht 4, wovon einer als Hin- und der andere als Rückleiter dient. Die Fahrdrähte 4 verlaufen etwa parallel zueinander und symmetrisch zu einer Fahrstreifenmitte oberhalb eines elektrifizierten Fahrstreifens 5 einer ein- oder mehrstreifigen Fahrbahn, etwa einer Autobahn. Die Fahrdrahthöhe Y über dem Fahrbahnniveau Y0 ist beispielsweise aufgrund eines Oberleitungsdurchhangs zwischen Stützstellen abhängig vom Ort X längs des Fahrstreifens 5.

Der Stromabnehmer 3 umfasst ein aufrichtbares Traggestell 6, welches zum Beispiel pantographenartig ausgebildet ist. Dazu weist es einem unteren Tragarm 7 und einen oberen Tragarm 8 auf, die durch ein Kniegelenk 9 verbunden sind. An einem fahrzeugseitigen Ende stützt sich das Traggestell 6 über ein Grundgelenk 10 auf dem Straßenfahrzeug 1 ab, etwa auf dessen Fahrzeugdach 11 oder auf einem separaten Aufbau auf Dachhöhe. An seinem fahrdrahtseitigen Ende trägt das Traggestell 6 eine Wippenanordnung 12, die über ein Wippengelenk 13 gelenkig mit dem oberen Tragarm 8 verbunden ist. Die Wippenanordnung 12 weist je Kontaktpol eine Wippe auf. Jede Wippe wird von einem von zwei oberen Tragarmen 8 getragen und weist mindestens eine quer zur Fahrzeuglängsachse ausgerichtete Schleifleiste 14 auf. Vorzugsweise weist jede Wippe zwei zueinander parallel und bezüglich der Fahrzeuglängsachse hintereinander angeordnete Schleifleisten 14 auf. Jede Schleifleiste 14 besteht vorzugsweise aus einem von einer Halterung getragenen Kohlestück. Grundgelenk 10, Kniegelenk 9 und Wippengelenke 13 weisen quer zur Fahrzeuglängsrichtung ausgerichtete Gelenkachsen auf, um dem Traggestell 6 ein pantographenartiges Aufstellen beziehungsweise Ablegen seiner Tragarme 7, 8 zu ermöglichen.

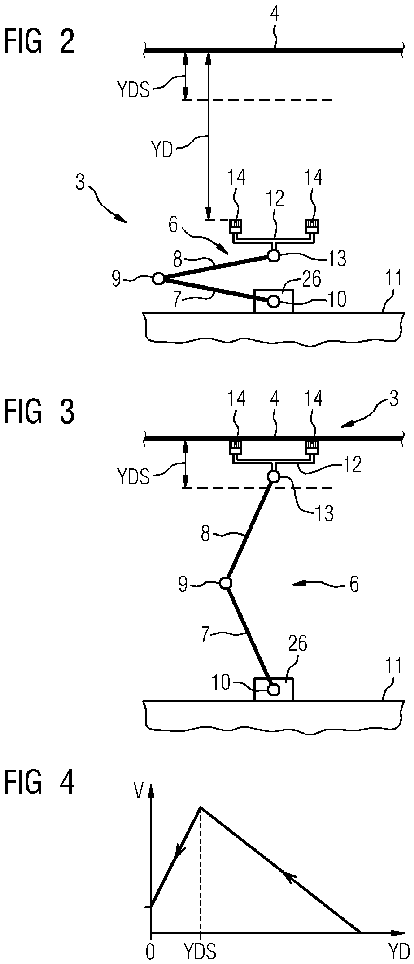

Zum Aufrichten des Traggestells 6 umfasst der Stromabnehmer 3 eine Hubvorrichtung 15, mittels der die Schleifleisten 14 aus einer unteren Ruheposition gemäß FIG 2 in eine obere Kontaktposition gemäß FIG 3 abhebbar sind. In der Ruheposition ist das Traggestell 6 auf dem Fahrzeugdach 11 abgelegt, etwa wenn das Straßenfahrzeug auf nicht elektrifizierten Fahrbahnabschnitten fährt oder parkt. In der Kontaktposition ist das Traggestell 6 aufgestellt, sodass die Schleifleisten 14 die Fahrdrähte 4 elektrisch kontaktierend beschleifen und während der Fahrt elektrische Energie aus der Oberleitungsanlage dem Traktionsantrieb 2 oder einem fahrzeugseitigen Energiespeicher zuführbar ist. Die Hubvorrichtung 15 umfasst einen pneumatischen Hubantrieb 16, der als Luftbalg ausgebildet ist und von einem Zuluftstrom einer Druckluftquelle 17, beispielsweise einem Kompressor, gespeist wird. In der Kontaktposition presst die Hubvorrichtung 15 die Schleifleisten 14 mit einer vorgebbaren Kontaktkraft an die Fahrdrähte 4.

Gemäß FIG 4 ist die Hubgeschwindigkeit V, mit der die Hubvorrichtung 15 die Schleifleisten 14 vertikal anhebt, steuerbar. Dabei wird die Hubgeschwindigkeit V der Schleifleisten 14 beim Erreichen, also nahe vor der Kontaktposition vermindert, um ein hartes Anschlagen der Schleifleisten 14 gegen die Fahrdrähte 4 zu vermeiden. Hierdurch können stoßbedingte Abplatzungen oder Ausbrüche von Kohlestücken aus den Schleifleisten 14 verhindert oder zumindest reduziert werden. Die Verschleißreduzierung ermöglicht längere Standzeiten der Schleifleisten 14 und senkt dadurch die Betriebskosten erfindungsgemäßer Stromabnehmer 3. Vorzugsweise steuert die Hubvorrichtung 15 die Hubgeschwindigkeit V der Schleifleisten 14 in Abhängigkeit einer Höhendifferenz YD zwischen Schleifleisten 14 und Fahrdrähten 4 an, welche durch eine Bestimmungseinrichtung 19 des Stromabnehmers 3 bestimmt wird. Die Hubphase der Schleifleisten 14 setzt sich gemäß FIG 4 aus einer Schnellhubphase, in der die Schleifleisten 14 aus ihrer Ruheposition mit hoher Hubgeschwindigkeit V angehoben werden, und einer anschließenden Kontaktierphase, in welcher die Schleifleisten 14 ab einer einstellbaren Höhendifferenzschwelle YDS abgebremst (vgl. FIG 3) und mit verminderter Hubgeschwindigkeit V mit den Fahrdrähten 4 in Kontakt gebracht werden. Hierdurch können schnelle und verschleißarme Andrahtvorgänge verwirklicht werden.

Die Bestimmungseinrichtung 19 zur Bestimmung der Höhendifferenz YD kann eine Sensoreinheit 20 zur direkten Messung der Höhendifferenz YD aufweisen, die als Laser oder Radar oder Magnetfeldsensor ausgebildet und auf der Wippenanordnung 12 oder dem Fahrzeugdach 11 befestigt sein kann. Zur indirekten Messung der Höhendifferenz YD kann die Bestimmungseinrichtung 19 mit einer Datenbank 21 verbunden sein, in der Fahrdrahthöhen Y der Oberleitungsanlage in Abhängigkeit des Ortes X gespeichert sind. Die Bestimmungseinrichtung 19 weist ferner eine beispielsweise als GPS-Empfänger ausgebildete Ortungseinheit 22 zur Ermittlung der aktuellen Fahrzeugposition X sowie einen Lagesensor 23 zur Ermittlung der aktuellen Schleifleistenhöhe YS über Fahrbahnniveau Y0 auf. Der Lagesensor 23 kann beispielsweise ein interner Höhensensor oder ein Drehwinkelsensor sein, der im Messergebnis die Höhe seines Einbauorts im Straßenfahrzeug 1 über Fahrbahnniveau Y0 berücksichtigt. Mit einer Recheneinheit 24 der Bestimmungseinrichtung 19 kann die Höhendifferenz YD aus der Fahrdrahthöhe Y0 und der Schleifleistenhöhe YS berechnet werden. Die Datenbank 21 ist im Straßenfahrzeug 1 mitgeführt, kann aber auch auf der Landseite in einer Betreiberzentrale der Oberleitungsanlage angeordnet sein und über eine drahtlose Kommunikationsverbindung mit der Recheneinheit 24 verbunden sein.

Erreicht die Höhendifferenz YD die voreingestellte Höhendifferenzschwelle YDS, die beispielsweise zwischen 20 cm und 50 cm liegen kann, so wird die Hubgeschwindigkeit V erfindungsgemäß gebremst. Hierfür kann ein zwischen Druckluftquelle 17 und Hubantrieb 16 geschaltetes Pneumatikventil 25 angesteuert wird, um den Zuluftstrom in den Hubantrieb 16 zu drosseln. Alternativ oder zusätzlich kann der Stromabnehmer 3 eine Bremseinrichtung 26 aufweisen, die ein Aufstellen des Traggestells 6 ab Erreichen der Höhendifferenzschwelle YDS verzögert. Die Bremseinrichtung 26 kann beispielsweise derart mit dem Grundgelenk 10 des Traggestells 6 gekoppelt sein, dass sie ab Erreichen der Höhendifferenzschwelle YDS ein einem Aufrichtmoment der Hubvorrichtung 15 entgegenwirkendes Bremsmoment auf das Traggestell 6 überträgt. Hier können elektrische, pneumatische, hydraulische oder magnetische Bremseinrichtungen 26 eingesetzt werden. Alternativ oder zusätzlich kann die Bremseinrichtung 26 derart mit einem Tragarm 7 des Traggestells 6 gekoppelt sein, dass sie ab Erreichen der Höhendifferenzschwelle YDS eine einer Aufrichtkraft der Hubvorrichtung 15 entgegenwirkende Bremskraft auf den Tragarm 7 überträgt.

In jedem Fall wird die Bremseinrichtung 26 deaktiviert, wenn die Schleifleisten 14 die Fahrdrähte 4 kontaktieren, damit es nicht zu einer Beeinflussung der Kontaktkräfte zwischen Schleifleisten 14 und Fahrdrähten 4 im regulären angedrahteten Betrieb des Stromabnehmers 3 kommt.

## Patentansprüche

1. Stromabnehmer (3) für ein elektrisch oder hybridelektrisch angetriebenes Straßenfahrzeug (1) zur Einspeisung von Traktionsenergie aus einer zweipoligen, je Kontaktpol einen Fahrdraht (4) aufweisenden Oberleitungsanlage, umfassend
- ein aufrichtbares Traggestell (6) mit einem fahrzeugseitigen Ende, an dem ein Grundgelenk (10) zur gelenkigen Abstützung auf dem Straßenfahrzeug (1) angeordnet ist, und mit einem fahrdrahtseitigen Ende, an dem es je Kontaktpol mindestens eine Schleifleiste (14) zur elektrischen Kontaktierung eines Fahrdrahtes (4) trägt, und
- eine Hubvorrichtung (15) zum Aufrichten des Traggestells (6), mittels der die Schleifleisten (14) aus einer unteren Ruheposition in eine obere Kontaktposition abhebbar sind, **dadurch gekennzeichnet,**
- **dass** die Hubvorrichtung (15) zum Aufrichten des Traggestells (6) mit steuerbarer Hubgeschwindigkeit (V) ausgebildet ist,
- wobei die Hubgeschwindigkeit (V) der Schleifleisten (14) beim Erreichen der Kontaktposition vermindert wird.

2. Stromabnehmer (3) nach Anspruch 1,
- umfassend eine Bestimmungseinrichtung (19) zur Bestimmung einer Höhendifferenz (YD) zwischen Schleifleisten (14) und Fahrdrähten (4),
- wobei die Hubvorrichtung (15) die Hubgeschwindigkeit (V) der Schleifleisten (14) in Abhängigkeit der Höhendifferenz (YD) ansteuert.

3. Stromabnehmer (3) nach Anspruch 2,
- wobei die Bestimmungseinrichtung (19) eine Sensoreinheit (20) zur direkten Messung der Höhendifferenz (YD) aufweist.

4. Stromabnehmer (3) nach Anspruch 2,
wobei die Bestimmungseinrichtung (19)
- mit einer Datenbank (21) verbunden ist, in der Fahrdrahthöhen (Y) über Fahrbahnniveau (Y0) für Orte (X) der Fahrdrähte (4) gespeichert sind,
- eine Ortungseinheit (22) zur Ermittlung der aktuellen Fahrzeugposition (X),
- einen Lagesensor (23) zur Ermittlung der aktuellen Schleifleistenhöhe (YS) über Fahrbahnniveau (Y0), und
- eine Recheneinheit (24) zur Berechnung der Höhendifferenz (YD) aus Fahrdrahthöhe (Y) und Schleifleistenhöhe (YS) aufweist.

5. Stromabnehmer (3) nach einem der Ansprüche 1 bis 4,
- wobei die Hubvorrichtung (15) die Schleifleisten (14) in einer Schnellhubphase aus der Ruheposition oberhalb einer Höhendifferenzschwelle (YDS) und in einer Kontaktierphase unterhalb der Höhendifferenzschwelle (YDS) anhebt, wobei die Hubgeschwindigkeit (V) in der Kontaktierphase gegenüber der Schnellhubphase abgebremst ist.

6. Stromabnehmer (3) nach Anspruch 5,
- wobei die Hubvorrichtung (15) einen pneumatischen Hubantrieb (16) umfasst, der durch einen Zuluftstrom aus einer Druckluftquelle (17) gespeist wird, und
- wobei die Hubgeschwindigkeit (V) der Schleifleisten (14) durch ein Pneumatikventil (25) für den Zuluftstrom gesteuert wird.

7. Stromabnehmer (3) nach Anspruch 5 oder 6,
- umfassend eine Bremseinrichtung (26), die derart mit einem Gelenk (10) des Traggestells (6) gekoppelt ist, dass sie ab Erreichen der Höhendifferenzschwelle (YDS) ein einem Aufrichtmoment der Hubvorrichtung (15) entgegenwirkendes Bremsmoment auf das Traggestell (6) überträgt.

8. Stromabnehmer (3) nach Anspruch 5 oder 6,
- umfassend eine Bremseinrichtung (26), die derart mit einem Tragarm (7) des Traggestells (6) gekoppelt ist, dass sie ab Erreichen der Höhendifferenzschwelle (YDS) eine einer Aufrichtkraft der Hubvorrichtung (15) entgegenwirkende Bremskraft auf den Tragarm (7) überträgt.

9. Stromabnehmer (3) nach Anspruch 7 oder 8,
- wobei die Bremseinrichtung (26) deaktiviert wird, wenn die Schleifleisten (14) die Fahrdrähte (4) kontaktieren.

10. Straßenfahrzeug (1) mit einem elektrischen oder hybrid-elektrischen Traktionsantrieb (2) und einem Stromabnehmer (3) zur Einspeisung von Traktionsenergie aus einer zweipoligen, je Kontaktpol einen Fahrdraht (4) aufweisenden Oberleitungsanlage nach einem der Ansprüche 1 bis 9.
